# EUROPEAN PATENT SPECIFICATION

(11) **EP 2 999 933 B1**
(45) Date of publication and mention of the grant of the patent: **27.05.2020**
(21) Application number: 14879660.0
(22) Date of filing: 27.01.2014
(51) Int. Cl.: F26B 3/12, A23B 7/026, A23L 3/46, A23P 10/20, F26B 3/088, F26B 3/092, F26B 3/20

(54) **PROCESS FOR DRYING AND POWDERIZING FUNCTIONAL FOODS, NUTRACEUTICALS, AND NATURAL HEALTH INGREDIENTS**
VERFAHREN ZUM TROCKNEN UND PULVERISIEREN FUNKTIONELLER LEBENSMITTEL, NUTRAZEUTIKA UND NATÜRLICHER GESUNDHEITSINHALTSSTOFFE
PROCÉDÉ DE SÉCHAGE ET DE RÉDUCTION EN POUDRE D'ALIMENTS FONCTIONNELS, DE PRODUITS NUTRACEUTIQUES ET D'INGRÉDIENTS SANTÉ NATURELS

(43) Date of publication of application: 30.03.2016
(73) Proprietor: Her Majesty The Queen In Right Of Canada As Represented By The Minister Of Natural Resources Canada, Ottawa, Ontario K1A 0E4 (CA)
(72) Inventor: BENALI, Marzouk, Mont-Saint-Hilaire, Québec J3H 6J3 (CA)
(74) Representative: Behr, Wolfgang
(86) International application number: PCT/CA2014/000055
(87) International publication number: WO 2015/109384

(56) References cited:
- EP-A1- 0 974 385
- WO-A1-03/037303
- CA-A1- 2 178 575
- US-A- 3 231 413
- US-A- 4 117 801
- US-A- 4 117 801
- US-A- 5 040 310
- US-A- 5 809 664
- US-A1- 2005 050 761
- US-A1- 2013 126 102

## Description

### FIELD OF THE INVENTION

The present invention relates to the process for drying and powderizing of functional foods, nutraceuticals, and natural health ingredients including liquid solutions, suspensions or dispersions, in a conical-cylindrical drying chamber.

### BACKGROUND OF THE INVENTION

The challenge for drying and powderizing functional foods, nutraceuticals, and natural health ingredients is to efficiently produce free-flowing powdery products, while maintaining a high level of bioactive functionality of said products.

Traditionally, spray drying is a technique which has been used mainly in the food and pharmaceutical industries to produce powders from liquid solutions, suspensions or dispersions. Typically, the liquids to be spray-dried are atomized into small droplets, and fed at the top of a tall tower through which hot air is passed concurrently or counter-currently. Proper atomization of the feed is of prime importance for efficient drying.

Three basic feed devices are used extensively in the industry: (a) single fluid nozzle or pressure type, (b) two-fluid nozzle or pneumatic type, and (c) spinning disc, though other techniques such as pulse combustion or ultrasonic dispenser are also used in certain applications.

Even though such a spray drying process has successfully been used over 60 years, its economic viability is still problematic and present challenges for a daily production less than 1000 kg of powdery biomaterials, mainly due to the large size of the equipment.

Freeze drying (i.e., lyophilisation) is another well-established technique to process biological materials, pharmaceuticals, and functional foods, which can previously be frozen. Freeze dryers commonly include a freeze drying chamber, shelves in this chamber for holding the material to be freeze-dried, a condenser, a vacuum system, and fluid pipes for connecting the various freeze dryer components. Generally, the freeze dryer shelves are cooled and heated during the freeze drying cycle with cooling and heating devices. In such dryers, the water or the organic solvent within the frozen material to be processed is removed as a vapour by sublimation from the frozen material placed in a vacuum chamber. After the frozen water or the organic solvent sublimes directly to a vapour, the freeze-dried product is removed from the shelves. The freeze-dried products are usually in a crystalline form requiring a post-processing step such as milling and sieving. One of the key advantages of freeze drying is no thermally-induced product degradation such as denaturation or modification of functionality properties of the freeze-dried product.

However, there remain drawbacks for both the traditional spray drying and freeze drying processes.

For example, spray dryers generally operate at high temperature (typically 120-250°C for heat-sensitive biomaterials). As such, the biomaterials are exposed to a high shear stress which can affect the stability of the macro and micro molecules in complex biomaterials (for example, proteins, flavonoids polysaccharides, etc.). There is also the adhesion of a dried product to the dryer walls due to their fine powder form when dry, and the stickiness phenomenon related to moisture content and material temperature. This adhesion issue adds cost for cleaning and leads to production losses. Additionally, the size of the drying chamber and the related ancillary equipment (e.g., high pressure atomizing device, powder collector, etc.) are large in size which increases the investment costs.

On the other hand, freeze dryers have long processing time (typically, from 12 to 24 hours per cycle, which translates into high operating costs) and high energy consumption (by 2 to 4 times higher than the other drying techniques). In addition, post-processing of dried products is required to obtain a desired size of the powder which also results in high investment costs (typically, from 3 to 6 times higher than spray dryers).

Therefore, there is still a need for an efficient and cost-effective drying to obtain powdery functional foods, nutraceuticals, and natural health ingredients.

There exist prior art references which disclose the use of an atomizing device or process and the use of spraying method.

For example, Canadian Patent 2,394,127 generally discloses the technique forming a hollow cone of liquid, the device comprising a housing into which a first medium in the form of a liquid to be atomized can be supplied, the housing comprising an outflow end and an insert piece with a guide end that interacts with an outflow end of the housing, thereby forming an annular outflow gap. Canadian Patent Application 2,021,970 generally discloses an air atomization paint spray gun. United States Patent 4,361,965 generally discusses a device for atomizing a reaction mixture, said device enabling the reaction mixture to be atomized in a reactor with the aid of at least a first gas and an atomizing nozzle. United States Patent 8,313,704 generally discloses a spouted bed device having a conical baffle which has an outside diameter that increases progressively downward, is closed at a top end thereof, and has a bottom end that is spaced apart from an inside wall of the cylinder, wherein the conical baffle is disposed at a position which is below and opposed to a bottom end of the tubular portion of the treatment zone. United States Patent 4,896,436 generally discloses a spray drying process and the apparatus, and provides a spray drying apparatus of integration type wherein several spray drying chambers are accommodated in a common housing.

Document EP 974 385 A1 shows a liquid material drying method whereby a large amount of medium particles are placed on a dispersion plate inside a drying vessel, the medium particles are fluidized by means of heated gas blown up through said dispersion plate, and supplied liquid material is dried by being caused to adhere to the surfaces of the medium particles, the solid component contained in the liquid material being collected continuously in the form of powder, wherein a whirling upward airflow caused by the heated gas is formed, at the least, in the region of the drying vessel above the fluidized layer of medium particles, the solid component in the liquid material having detached from the surfaces of the aforementioned medium particles being caused to disperse, float and dry further in this whirling upward airflow.

US 3 231 413 A shows a process for producing granules. US 2013/126102 A1 shows a vacuum pressure spray drying method. US 5 809 664 A shows a sprout-fluid bed drying system. US 4 117 801 A shows an apparatus for spray coating discrete particles.

However, it will be apparent to a person skilled in the art that none of the known patents and prior art revealed in technical literature discloses all features of the present invention, *inter alia,* the atomizing device, a conical-cylindrical drying chamber and the use of inert carriers.

### SUMMARY OF THE INVENTION

The present invention aims at solving the existing problems in the prior art by efficient production in a continuous manner, free-flowing powdery products, while maintaining a high level of the bioactive functionality of said products.

This object is solved by a system for producing free-flowing powder according to claim 1 and by a use of said system according to claim 15.

Preferred embodiments of the present invention are the subject matter of the dependent claims.

In accordance with one aspect, the present invention allows simultaneously shortening the residence time of the materials to be processed in the drying chamber while increasing the contact surface area between the gaseous drying medium and the materials to be processed, thus downsizing the volume of the drying chamber.

Other features and advantages of the present invention will become apparent from the following detailed description and the accompanying drawings, which illustrate, by way of example, the principles of the invention.

### BRIEF DESCRIPTION OF THE DRAWINGS

By way of example only, preferred embodiments of the present invention are described hereinafter with reference to the accompanying drawings, wherein:
Figure 1 is a schematic view of the conical-cylindrical drying chamber disclosed in the present invention;
Figure 2 is a perspective view of a conical-cylindrical drying chamber equipped with one outlet powder discharging pipe;
Figure 3 is a perspective view of a conical-cylindrical drying chamber equipped with two outlet powder discharging pipes;
Figure 4a is an exploded side view showing the details of removable and adjustable atomizing device;
Figure 4b is an exploded side view showing the details of removable and adjustable atomizing device;
Figure 4c is an exploded top view showing the details of removable and adjustable atomizing device;
Figure 5 is a schematic view of an embodiment not belonging to the invention, comprising a conical-cylindrical drying chamber consisting of three conical-cylindrical compartments with adjustable atomizing nozzles installed at the top of each drying compartment;
Figure 6 is a schematic view of a conical-cylindrical drying chamber consisting of three conical-cylindrical compartments with adjustable atomizing nozzles installed at the bottom of each drying compartment;
Figure 7 is a schematic view of an embodiment not belonging to the invention, comprising a conical-cylindrical drying chamber with a drainage pipe, a stirrer in the shape of reverse truncated cone;
Figure 8 is a schematic view of a conical-cylindrical drying chamber operated in a closed loop for recycling of the inert heat carriers;
Figure 9a is a side perspective view of a sanitary filtering device; and
Figure 9b is an exploded perspective view of a sanitary filtering device.

### DETAILED DESCRIPTION OF THE INVENTION

The system disclosed in the present invention for a continuous processing of liquid solutions, suspensions or dispersions may comprise the following elements:
1) A feeding reservoir for supplying homogenous liquid composition;
2) A pumping device for increasing fluid energy of the liquid composition;
3) An atomizing device comprising:
   (a) two-fluid nozzle fitted at its bottom with its inherent part in the shape of a truncated cone to efficiently distribute the upward gaseous drying medium over the nozzle;
   (b) a cylindrical plenum chamber wherein the two-fluid nozzle is located;
   (c) a micrometric tool (or micro-adjustment set-up) attached to the atomizing device to adjust the vertical position of the two-fluid nozzle;
   (d) at least two lateral streamlined tube-like devices for accelerating and directing the atomizing fluid and the liquid suspension in two opposite directions; and
   (e) an accelerating zone of a drying medium consisting of a cylindrical pipe, preferably made from polished stainless steel, located at the bottom of the cylindrical plenum and having a length equivalent to at least five times the diameter of the inlet of the said cylindrical plenum chamber; and
4) A conical-cylindrical drying chamber containing a drying medium and equipped with a manhole, a multi-nozzle manifold and optionally removable insulation panels.

The conical-cylindrical drying chamber should sustain a temperature of a gaseous drying medium of at least 250 °C.

For drying and powdering food products, the system is equipped with a drying medium consisting of a single bed or multi-beds of inert carriers aimed at reducing the volume of the drying chamber.

The present invention will now be described with reference to the accompanying drawings, in which some, but not all embodiments of the invention are shown.

The liquid solutions, suspensions or dispersions are preheated to the desired temperature but not more than 35°C.

Two types of the pre-processing step of the liquid solutions, suspensions or dispersions may be considered: When the liquid solutions, suspensions or dispersions are thixotropic (i.e., gel-like), they are difficult to be pumped into the drying chamber. Therefore, a motorized mechanical agitation device is used to convert them into a fluid state. When the liquid solutions, suspensions or dispersions contain any carbohydrate whose molecules consist of a number of monosaccharide components or their simple derivatives bonded together in a long chain-like structure of high molecular weight, an enzymatic treatment is used to break this structure into substances with lower molecular weight.

The resulted liquid solutions, suspensions or dispersions are then fed to the drying chamber through an adjustable atomizing device to generate fine droplets, forming a thin coat on the hot inert carrier surfaces being inherent in the present invention and then dried and powderized. A wire-mesh conical-cylindrical screen is installed at the outlet of the drying chamber to discharge the powdered product while preventing the entrainment of the inert carriers.

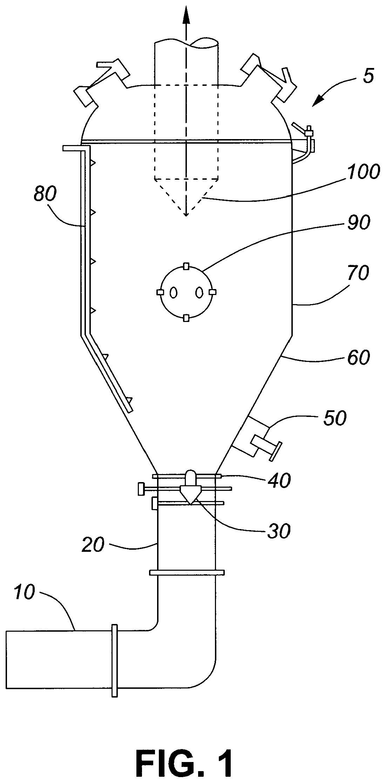

Figure 1 presents a schematic view of a system **5** disclosed in the present invention, including an expansion flexible joint **10,** a gas accelerating pipe **20,** a removable atomizing device **30,** a circular grid **40** to support the bed of inert carriers, a discharge pipe **50** equipped with a removable plug to take out the inert carriers, a conical drying chamber **60** connected with a cylindrical discharging chamber **70** equipped with a multi-compressed air nozzle manifold **80** which can be stationary, or rotated continuously or intermittently, to prevent the deterioration of the hydrodynamics and the drying performance due to a possible build-up of the solid deposit on the inner walls of the drying chamber, the conical-cylindrical discharging chamber **70** also equipped with a manhole **90,** a wire-mesh conical-cylindrical screen **100** to discharge the powder while preventing the entrainment of the inert carries.

System **5** may have a dome-shaped cover and at least one outlet discharging pipe.

The configuration, construction and operation of the system **5** can be provided in accordance with the above description in association with the good practice known to a person skilled in the art.

The dome-shaped cover may be equipped with removable glass windows, for example, borosilicate glasses, mounted on a stub-pipe, or a flanged outlet pipe. The outer walls of the drying chamber may be further lined with removable insulation panels (not shown) to avoid heat losses.

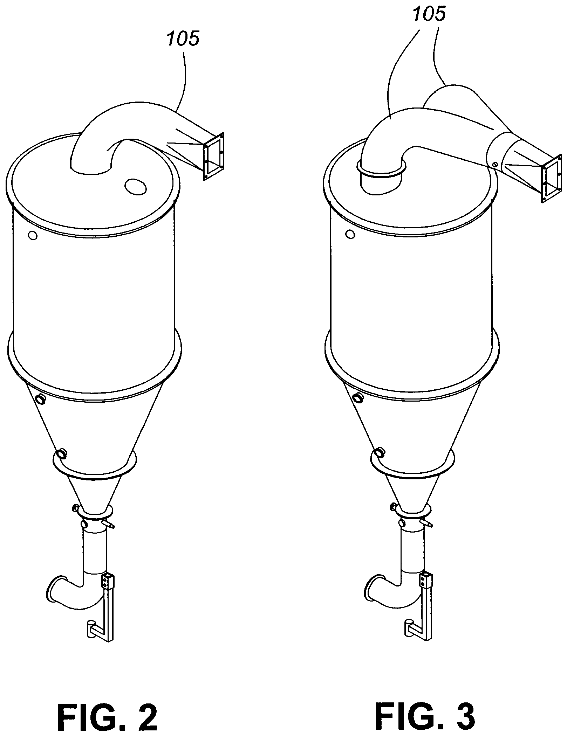

Figure 2 is an embodiment with the conical-cylindrical drying chamber equipped with one outlet powder discharging pipe **105.**

Figure 3 is an embodiment with the conical-cylindrical drying chamber equipped with two outlet powder discharging pipes **105** in order to enhance the discharging capacity.

A person skilled in the art would appreciate that various options and combinations for the number and shape of discharging pipes could be used.

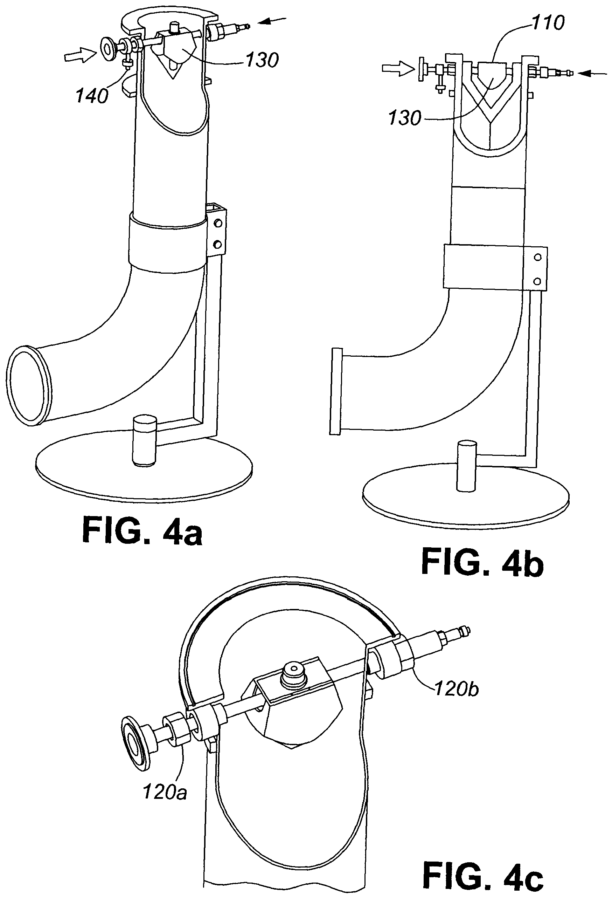

Figures 4a and 4b and 4c illustrate the details of removable and adjustable atomizing device **30.** Atomizing device **30** comprises according to the invention a gas plenum chamber, a two-fluid nozzle **110,** a streamlined tube-like device **120a** wherein liquid solutions, suspensions or dispersions are directed to the liquid inlet orifice of the nozzle, a streamlined tube-like device **120b** wherein the compressed air is flowing at a pressure of more than 275.79 Kilo Pascal and less than 675.69 Kilo Pascal, and a truncated cone **130.**

The so-called "truncated cone" body is a solid frustum of pyramid surmounted by a parallelepiped with chamfered faces. These two parts are assembled with a dowel made of stainless steel or polytetrafluroethylene (PTFE) or any equivalent material which can sustain high and frequent heat shocks. It provides a uniform distribution of upward drying medium stream across the annulus between the nozzle and the gas accelerating pipe.

The body of the truncated cone **130** may be made of materials with a low thermal conductivity, a low coefficient of volumetric thermal expansion, and sufficient mechanical resistance, such as PTFE or any equivalent material, to prevent the momentum and heat losses of the upward gaseous drying medium over the two-fluid nozzle.

The atomizing device **30** may optionally be equipped with a micrometric tool or micro-adjustment set-up **140** to move up or down the two-fluid nozzle.

A person skilled in the art would appreciate that various other options and combinations for the atomizing device **30** with two-fluid nozzle may be engaged for system **5.**

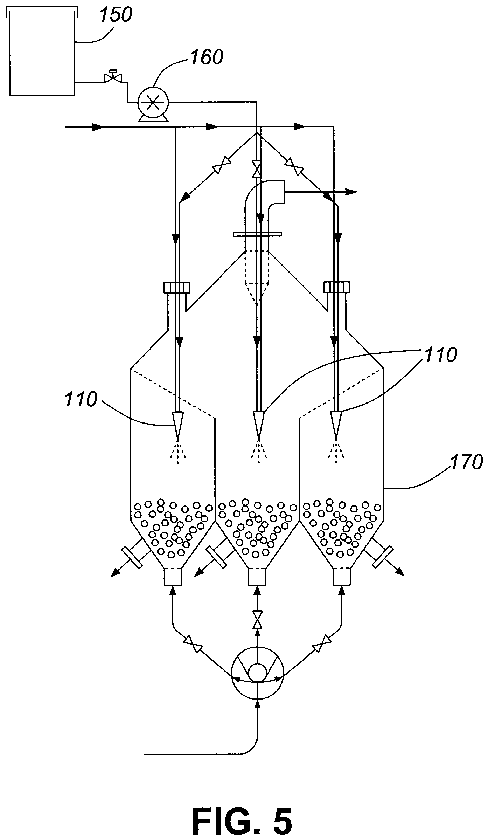

Figure 5 illustrates an embodiment not belonging to the present invention comprising a feeding reservoir **150** of the liquid solutions, suspensions or dispersions, a positive displacement pump **160,** a series of atomizing devices **30** (for example, three) with adjustable atomizing nozzles **110** installed at the top of each drying compartment, a series of motorized valves at the inlet of each of streamlined tube-like devices **120,** a drying chamber **170** consisting of three conical-cylindrical compartments, a sealed gas plenum chamber with inner walls divided into three sections to feed uniformly each drying chamber compartment.

An emptying pipe may be disposed in lateral side of the conical part of each drying chamber compartment with an angle equivalent to the slip angle of the inert carriers.

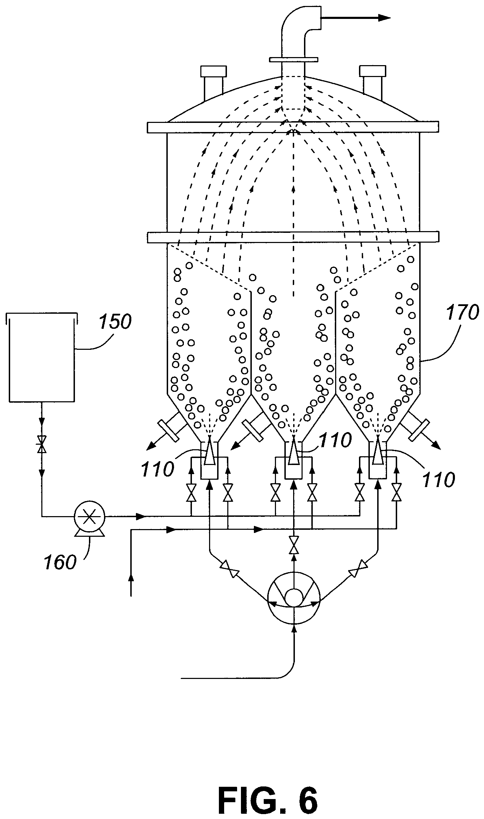

Figure 6 illustrates an embodiment of the present invention comprising a feeding reservoir **150** of the liquid solutions, suspensions or dispersions, a positive displacement pump **160,** a series of three adjustable atomizing nozzles **110** installed at the bottom of each drying compartment, a series of motorized valves at the inlet of each of streamlined tube-like devices **120,** a drying chamber **170** consisting of three conical-cylindrical compartments, a sealed gas plenum chamber with inner walls divided into three sections to feed uniformly each drying chamber compartment, an emptying pipe disposed in the lateral side of the conical part of each drying chamber compartment with an angle equivalent to the slip angle of the inert carriers.

Because of specific hydrodynamics and particularities of the drying mechanism on inert carriers, the volume of the drying chamber is limited, the use of multiple conical-cylindrical drying chambers allows an increase of the processing capacity and, consequently, the productivity of the dryer.

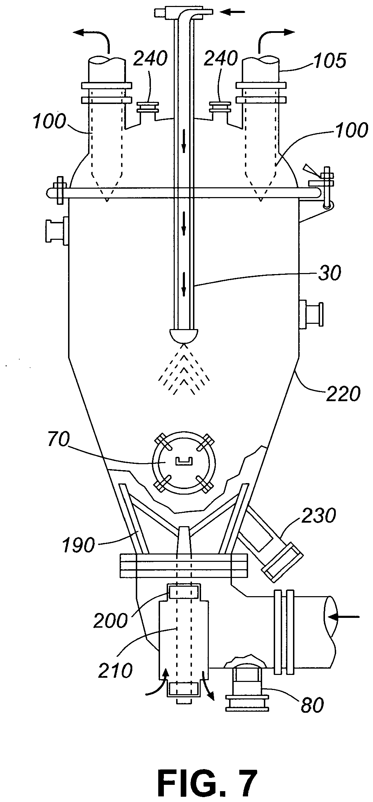

Figure 7 illustrates an embodiment not belonging to the present invention further comprising a drainage pipe **180,** a stirrer **190** in the shape of reverse truncated cone operated with a motor and high temperature bearings **200** and a cooling jacket **210** to avoid any thermal expansion of the bearings, a conical-cylindrical drying chamber **220** equipped with a manhole **70,** a circular grid to support the bed of inert carriers, an emptying pipe equipped with removable plug **230** to discharge the inert carriers, an adjustable vertical atomizing device **30** which can be stationary or rotated continuously or intermittently, two outlet discharging pipes **105** equipped with a wire-mesh conical-cylindrical screen **100** to discharge the powder while preventing the entrainment of the inert carries, a dome-shaped cover equipped with borosilicate glasses **240** mounted on a stub-pipe.

Again, the outer walls of the drying chamber may be lined with removable insulation panels to avoid heat losses.

During continuous dryer operation, up to 10% of used inert carriers can be continuously or intermittently taken out of the dryer, cleaned in a separate device and returned back to the dryer.

For the present invention, the inert carriers are in the shape of full spherical beads or hollow spherical beads, or a mix of both. Spherical shape allows uniform drying of the liquid coat on the beads, whereas the liquid coat deposited on the inert carriers resembling cubes or cylinders will dry faster on the edges and the corners, which will lead to uneven heating, leaving dry material on the plains of the inert carriers but over dried (i.e., overheated) material on the edges and corners. The majority of heat-sensitive materials (e.g., functional foods, nutraceuticals, natural health ingredients, etc.) can be denaturized or thermally deteriorated.

The inert carriers serve as a heat and mass transport aid during the drying and the powderizing process.

The inert carriers may be in the shape of full spherical beads or hollow spherical beads or a mix of both, and may be composed of a mixture of fine and coarse PTFE spherical beads of sizes varying from 3 to 8 mm or titanium oxide spherical beads of size not greater than 2.5 mm. The size of inert carriers is of importance for the performance of the drying and powderizing process. Higher size than the limits provided herein will not allow spouting of inert carriers or will require unacceptable flow rates of gaseous drying medium, leading to excessive energy requirements, energy losses and oversized equipments (e.g., fans, filters, heater, etc).

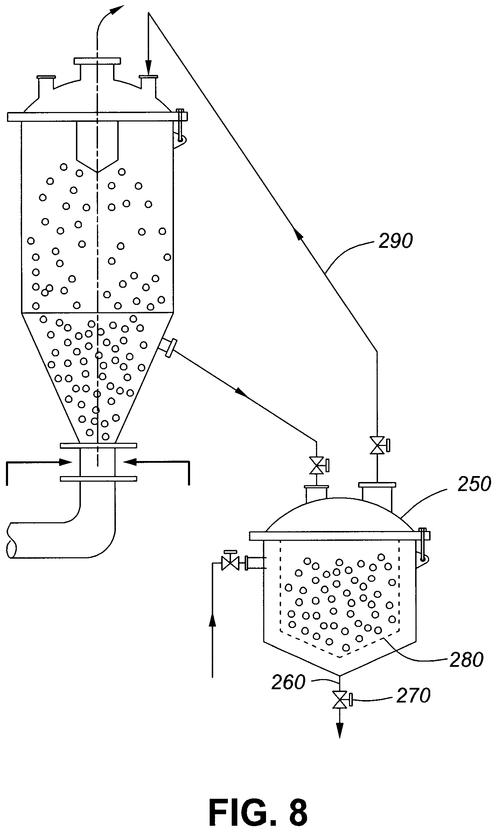

Figure 8 illustrates an embodiment of the present invention, in a closed loop for additional recycling of the inert heat carriers, comprising: a closed tank **250** containing water and chemical reagents to clean and remove any coat residuals or possible active microorganism from the surface of the inert carriers; a pipe **260** with a motorized valve **270** installed at the bottom of the closed tank to dump the water; a wire-mesh basket **280,** which may be made of stainless steel or any equivalent sanitary material, for the used inert carriers to be recovered from the drying chamber; a recycling pipe **290** to transport the cleaned inert carriers from the wire-mesh basket to the drying chamber.

The system may optionally be equipped with a device for separating the powdery product from the gaseous drying medium consisting of a cyclone-type separator or a vortex tube-type separator or a combination thereof.

For example, a cyclone-type separator equipped with a truncated cone vortex stabilizer connected to a sanitary filtering device may be installed at the outlet of the drying chamber for separating the powdery product from the gaseous drying medium and recovering it into the collector.

Cyclone and filtering devices are standard equipments/apparatus used to control particulate emissions. They are commonly used as primary separators, pre-cleaners to reduce solids loading or as classifiers to separate incoming dust in various size fractions. In the present invention, the design of the cyclone integrates a truncated cone vortex stabilizer which allows a homogeneous migration of the particles toward the inner walls of the cyclone and a uniform discharge of particles, and minimizes the carryover of some particles during their movement downward the conical section through the vortex induced within the cyclone.

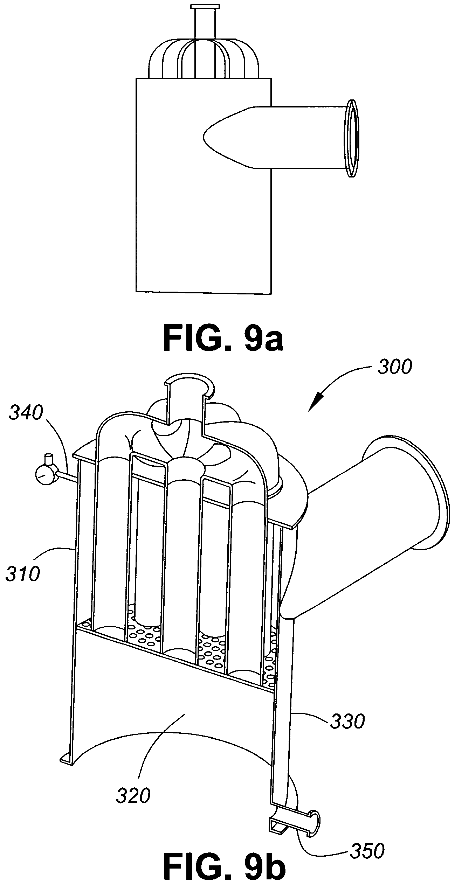

The design of the sanitary filtering device is shown in Figures 9a and 9b. The sanitary filtering device is of modular type and provides a flexible maintenance. The design prevents continuously the clogging of the filtering surfaces due to possible cohesiveness of fine particles, and controls dust emissions with particles even less than 5 microns in size. The sanitary filtering device **300** is composed of multi-filters **310** located vertically in the housing **320** supported by a grid **330** at their bottom, a plurality of jet pulsing nozzles **340** for cleaning of clogged filter surfaces to ensure that the powder is removed from every part of the filter and to prevent the clogging of the filters which minimizes the maintenance cost.

The sanitary filtering device **300** may further be equipped with a suction head **350** connected to a powder collector, and a cleaning-in-place device comprising a series of downpipe rinsing devices equipped with clip-on spray balls generating a cleaning liquid spray with an angle varying from 180° to 360°, a relief valve, and an outlet pipe assembled tangentially to blowout the gaseous drying medium.

## Claims

1. A system for producing free-flowing powder from liquid solutions or liquid suspensions or liquid dispersions of functional foods, nutraceuticals, and natural health ingredients comprising in combination:
(a) a feeding reservoir (150) equipped with an agitator to maintain homogenous liquid compositions of said liquid solutions or liquid suspensions or liquid dispersions;
(b) a positive displacement pumping device (160) to pump said liquid composition into at least one atomizing device;
(c) said at least one atomizing device (30) composed of:
(i) at least one fluid nozzle (110) fitted at its bottom with a body (130) in the shape of a truncated cone to distribute an upward gaseous drying medium over said nozzle (110);
(ii) a optional micrometric tool (140) to vertically adjust the position of the said fluid nozzle;
(iii) a first streamlined tube-like device (120a) for directing said liquid solutions, liquid suspensions or liquid dispersions to the nozzle (110) in a first direction and a second streamlined tube-like device (120b) for directing compressed air to the nozzle (110) in a second direction opposite to the first direction;
(iv) a cylindrical plenum chamber wherein the fluid nozzle (110) is located;
(v) a cylindrical pipe (20) located at the bottom of the cylindrical plenum and having a length equivalent to at least five times the diameter of the inlet of the said cylindrical plenum chamber;
(d) a conical-cylindrical drying chamber (60, 70) adapted to sustain a temperature of gaseous drying medium at 250°C and above equipped with a manhole (90), a multi-nozzle manifold (80) and optionally removable insulation panels;
(e) an intermediate drying medium consisting of a single bed or multi-beds of inert carriers leading to reduced volume of the drying chamber.

2. The system according to claim 1 wherein the inert carriers are in the shape of full spherical beads or hollow spherical beads, or a mix of both.

3. The system according to claim 2 wherein the inert carriers are composed of a mix of fine and coarse polytetrafluroethylene spherical beads of size varying from 3 to 8 mm or titanium oxide spherical beads of size less than 2.5 mm.

4. The system according to claim 1 further comprising a dome-shape cover equipped with at least one outlet discharging pipe (105).

5. The system according to claim 1 further comprising a device for separating the powdery product from the gaseous drying medium consisting of a cyclone-type separator or a vortex tube-type separator or a combination of thereof.

6. The system according to claim 1 further comprising a sanitary filtering device (300).

7. The system according to claim 1 wherein the multi-compressed air nozzle manifold (80) is mounted in a such way that it can be either stationary or rotating continuously or intermittently within the drying chamber (60, 70) to prevent deterioration of the hydrodynamics and the drying performance due to a possible solids build-up on the internal walls of the drying chamber.

8. The system according to claim 1 wherein the drying chamber (170) is composed of at least two multi-compartments to enhance the processing capacity and the powderizing productivity.

9. The system according to claim 1, wherein a gas plenum chamber is disposed beneath and in a sealed manner with the walls of the drying chamber (60, 70).

10. The system according to claim 1 wherein internal walls of the gas plenum chamber are divided into at least two sections to feed uniformly each drying chamber compartment.

11. The system according to claim 1 wherein an emptying pipe is disposed in lateral side of the conical part of each drying chamber compartment with an angle equivalent to or over the slip angle of the inert carriers.

12. The system according to claim 1 wherein a removable and adjustable atomizing device (30) is installed at the top or at the bottom of each drying compartment (60, 70).

13. The system according to claim 1 further comprising a closed tank (250) containing water and chemical reagents to clean and remove any remaining coat or possible active microorganism from the surface of the inert carriers.

14. The system according to claim 1 wherein a stirrer (190) in the shape of reverse truncated cone is inserted at the bottom of conical-cylindrical drying chamber to maintain a continuous and organized flow of the inert carriers in the most humid zone located at the bottom of the conical-cylindrical drying chamber.

15. Use of the system according to claim 1 wherein the gaseous drying medium is a hot dry air, hot carbon dioxide or hot nitrogen, or a combination of at least two of them.

## Patentansprüche

1. System zur Herstellung von freiströmendem Pulver aus Flüssigkeitslösungen oder Flüssigkeitssuspensionen oder Flüssigkeitsdispersionen funktioneller Lebensmittel, Nutrazeutika und natürlichen Gesundheitsinhaltsstoffen, aufweisend, in Kombination:
(a) ein Zufuhr-Reservoir (150), das mit einem Agitator bestückt ist, um homogene Flüssigkeitszusammensetzungen diesen Flüssigkeitslösungen oder Flüssigkeitssuspensionen oder Flüssigkeitsdispersionen aufrechtzuerhalten;
(b) eine Verdrängungspumpvorrichtung (160), um die Flüssigkeitszusammensetzung in zumindest eine Zerstäubungsvorrichtung zu pumpen;
(c) wobei sich die zumindest eine Zerstäubungsvorrichtung (30) gebildet ist aus:
(i) zumindest einer Fluiddüse (110), die an ihrem Boden mit einem Körper (130) in Form eines Kegelstumpfs versehen ist, um ein nach oben strömendes gasförmiges Trocknungsmedium über diese Düse (110) zu verteilen;
(ii) ein optionales mikrometrisches Werkzeug (140), um die Position der Fluiddüse vertikal zu verstellen;
(iii) eine erste stromlinienförmige, röhrenartige Vorrichtung (120a) zum Lenken der Flüssigkeitslösungen, Flüssigkeitssuspensionen oder Flüssigkeitsdispersionen zu der Düse (110) in einer ersten Richtung, und eine zweite stromlinienförmige, röhrenartige Vorrichtung (120b) zum Lenken von Druckluft an die Düse (110) in einer zweiten, der ersten Richtung entgegengesetzten Richtung;
(iv) eine zylindrische Verteilerkammer, in der sich die erste Fluiddüse (110) befindet;
(v) ein zylindrisches Rohr (20), das sich am Boden des zylindrischen Verteilerraums befindet und eine Länge hat, die mindestens dem fünffachen Durchmesser des Einlasses der zylindrischen Verteilerkammer entspricht;
(d) eine konisch-zylindrische Trocknungskammer (60, 70), die eingerichtet ist, eine Temperatur eines gasförmigen Trocknungsmediums bei 250 °C zu halten und oberhalb mit einem Schacht (90), einem Mehrdüsenverteiler (80) und optional abnehmbaren Isolierpaneelen ausgerüstet ist;
(e) ein mittleres Trocknungsmedium, das aus einem einzelnen Bett oder Multibetten von interten Trägerstoffen besteht, die zu einem reduzierten Volumen der Trocknungskammer führen.

2. System nach Anspruch 1, wobei die inerten Trägerstoffe in der Form vollkugelförmiger Partikeln oder hohlkugelförmiger Partikeln oder einer Mischung aus beiden vorliegen.

3. System nach Anspruch 2, wobei die inerten Trägerstoffe sich zusammensetzen aus einem Gemisch aus feinen und groben Polytetrafluorethylen-Partikeln mit einer Größe, die von 3 bis 8 mm variiert, oder aus kugelförmigen Titanoxidpartikeln mit einer Größe von weniger als 2,5 mm.

4. System nach Anspruch 1, ferner aufweisend eine kuppelförmige Abdeckung, die mit zumindest einem Auslassableitungsrohr (105) versehen ist.

5. System nach Anspruch 1, ferner aufweisend eine Vorrichtung zum Abscheiden des pulverförmigen Erzeugnisses aus dem gasförmigen Trocknungsmittel, bestehend aus einem Abscheider vom Zyklontyp oder einem Abscheider vom Wirbelrohrtyp oder einer Kombination dieser.

6. System nach Anspruch 1, ferner aufweisend eine sanitäre Filtervorrichtung (300).

7. System nach Anspruch 1, wobei der Mehrdüsen-Druckluftkrümmer (80) derart montiert ist, dass er entweder ortsfest oder durchgehend oder intermittierend drehend innerhalb der Trocknungskammer (60, 70) sein kann, um eine Verschlechterung der Hydrodynamik und der Trocknungsleistung aufgrund einer möglichen Feststoffakkumulation an den Innenwänden der Trocknungskammer zu verhindern.

8. System nach Anspruch 1, wobei die Trocknungskammer (170) aus mindestens zwei Multi-Kompartimenten gebildet ist, um die Verarbeitungskapazität und die Pulverisierungskapazität zu verbessern.

9. System nach Anspruch 1, wobei eine Gasverteilerkammer unterhalb und in dichter Weise mit den Wänden der Trocknungskammer (60, 70) angeordnet ist.

10. System nach Anspruch 1, wobei die Innenwände der Gasverteilerkammer in mindestens zwei Abschnitte geteilt sind, um jedes Trocknungskammer-Kompartiment gleichmäßig zu versorgen.

11. System nach Anspruch 1, wobei ein Entleerungsrohr auf der Lateralseite des konischen Teils von jedem Trocknungskammer-Kompartiment mit einem Winkel gleich oder größer dem Schlupfwinkel der inerten Trägerstoffe angeordnet ist.

12. System nach Anspruch 1, wobei eine abnehmbare und verstellbare Zerstäubungsvorrichtung (30) an der Oberseite oder der Unterseite von jedem Trocknungskompartiment (60, 70) verbaut ist.

13. System nach Anspruch 1, ferner aufweisend einen geschlossenen Tank (250), der Wasser und chemische Reaktionsstoffe zum Reinigen und Entfernern einer verbleibenden Beschichtung oder möglicher aktiver Mikroorganismen von der Oberfläche der inerten Träger enthält.

14. System nach Anspruch 1, wobei ein Rührer (190) in der Form eines umgekehrten Kegelstumpfs an der Unterseite der konisch-zylindrischen Trocknungskammer eingesetzt ist, um eine durchgehende und geordnete Strömung der inerten Trägerstoffe in die feuchteste Zone, die sich an der Unterseite der konisch-zylindrischen Trocknungskammer befindet, aufrechtzuerhalten.

15. Verwendung des Systems nach Anspruch 1, wobei das gasförmige Trocknungsmedium eine trockene Heißluft, heißes Kohlendioxid oder heißer Stickstoff oder eine Kombination aus mindestens zwei dieser ist.

## Revendications

1. Système de production de poudre fluide provenant de solutions liquides ou de suspensions solides ou de dispersions liquides d'aliments fonctionnels, de produits nutraceutiques et d'ingrédients santé naturels comprenant en combinaison :
(a) un réservoir d'alimentation (150) équipé d'un agitateur pour maintenir des compositions liquides homogènes desdites solutions liquides ou suspensions liquides ou dispersions liquides ;
(b) un dispositif de pompage à déplacement positif (160) pour pomper ladite composition liquide dans au moins un dispositif d'atomisation ;
(c) ledit au moins un dispositif d'atomisation (30) composé de :
(i) au moins une buse de fluide (110) dotée au niveau de sa partie inférieure d'un corps (130) sous la forme d'un cône tronqué pour distribuer un milieu de séchage gazeux vers le haut sur ladite buse (110) ;
(ii) un outil micrométrique optionnel (140) pour régler verticalement la position de ladite buse de fluide ;
(iii) un dispositif du type tube fuselé (120a) pour diriger lesdites solutions liquides, suspensions liquides ou dispersions liquides vers la buse (110) dans une première direction et un second dispositif du type tube fuselé (120b) pour diriger un air comprimé vers la buse (110) dans une seconde direction opposée à la première direction ;
(iv) une chambre de distribution cylindrique dans laquelle la buse de fluide (110) est située ;
(v) un tuyau cylindrique (20) situé au niveau de la partie inférieure de la chambre de distribution cylindrique et présentant une longueur équivalente à au moins cinq fois le diamètre de l'admission de ladite chambre de distribution cylindrique ;
(d) une chambre de séchage conique-cylindrique (60, 70) adaptée à maintenir une température de milieu de séchage gazeux égale ou supérieure à 250°C équipée d'une bouche d'égout (90), d'un collecteur à buses multiples (80) et éventuellement de panneaux d'isolation amovibles ;
(e) un milieu de séchage intermédiaire composé d'un lit simple ou de lits multiples de supports inertes menant à un volume réduit de la chambre de séchage.

2. Système selon la revendication 1 dans lequel les supports inertes sont sous la forme de billes sphériques pleines ou de billes sphériques creuses, ou d'un mélange des deux.

3. Système selon la revendication 2 dans lequel les supports inertes sont composés d'un mélange de billes sphériques de polytétrafluoroéthylène fines et grossières d'une taille variant de 3 à 8 mm ou de billes sphériques d'oxyde de titane d'une taille inférieure à 2,5 mm.

4. Système selon la revendication 1 comprenant en outre un couvercle en forme de dôme équipé d'au moins un tuyau de décharge de sortie (105).

5. Système selon la revendication 1 comprenant en outre un dispositif pour séparer le produit en poudre du milieu de séchage gazeux composé d'un séparateur du type cyclonique ou d'un séparateur du type à tube Vortex ou d'une combinaison de ceux-ci.

6. Système selon la revendication 1 comprenant en outre un dispositif de filtration sanitaire (300).

7. Système selon la revendication 1 dans lequel le collecteur à multiples buses d'air comprimé (80) est monté de manière à pouvoir être soit fixe soit rotatif en continu ou par intermittence à l'intérieur de la chambre de séchage (60, 70) pour empêcher une détérioration de l'hydrodynamique ou de la performance de séchage en raison d'une éventuelle accumulation de solides sur les parois internes de la chambre de séchage.

8. Système selon la revendication 1 dans lequel la chambre de séchage (170) est composée d'au moins deux compartiments multiples pour augmenter la capacité de traitement et la productivité de pulvérisation.

9. Système selon la revendication 1, dans lequel une chambre de distribution de gaz est disposée sous et d'une manière étanche avec les parois de la chambre de séchage (60, 70).

10. Système selon la revendication 1 dans lequel des parois internes de la chambre de distribution de gaz sont divisées en au moins deux sections pour alimenter uniformément chaque compartiment de chambre de séchage.

11. Système selon la revendication 1 dans lequel un tuyau de vidange est disposé dans un côté latéral de la partie conique de chaque compartiment de chambre de séchage avec un angle équivalent ou supérieur à l'angle de glissement des supports inertes.

12. Système selon la revendication 1 dans lequel un dispositif d'atomisation amovible et réglable (30) est installé au niveau de la partie supérieure ou au niveau de la partie inférieure de chaque compartiment de séchage (60, 70).

13. Système selon la revendication 1 comprenant en outre un réservoir fermé (250) contenant de l'eau et des réactifs chimiques pour nettoyer et retirer tout revêtement restant ou possible microorganisme actif de la surface des supports inertes.

14. Système selon la revendication 1 dans lequel un agitateur (190) sous la forme d'un cône tronqué inversé est inséré au niveau de la partie inférieure de la chambre de séchage conique-cylindrique pour maintenir un flux continu et organisé des supports inertes dans la zone la plus humide située au niveau de la partie inférieure de la chambre de séchage conique-cylindrique.

15. Utilisation du système selon la revendication 1 dans laquelle le milieu de séchage gazeux est un air sec chaud, un dioxyde de carbone chaud ou un azote chaud, ou une combinaison d'au moins deux d'entre eux.
